# EUROPÄISCHE PATENTANMELDUNG

(11) **EP 4 772 336 A2**
(43) Veröffentlichungstag der Anmeldung: **08.07.2026**
(21) Anmeldenummer: 25221224.6
(22) Anmeldetag: 05.12.2025
(51) Int. Cl.: B29D 30/00, B29D 30/06, B29D 30/52

(54) **VERFAHREN ZUM HERSTELLEN EINES LAUFSTREIFENS FÜR EINE RUNDERNEUERUNG UND HERSTELLUNGSANLAGE**

(30) Priorität: 11.12.2024 DE 102024211777
(71) Anmelder: Continental Reifen Deutschland GmbH, 30175 Hannover (DE)
(72) Erfinder: Farkas, Peter, 020 01 Púchov (SK)
(74) Vertreter: Continental Corporation

(57) **Zusammenfassung**

Die Erfindung betrifft ein Verfahren zum Herstellen eines vulkanisierten Laufstreifens (100) für eine Runderneuerung, mit mindestens den folgenden Schritten:
- Bereitstellen von unvulkanisierten Materialbahnen (Mu.i);
- Beladen der unvulkanisierten Materialbahnen (Mu.i) in Vulkanisierungsformen (5.i) und Vulkanisieren der unvulkanisierten Materialbahnen (Mu.i) zum Erhalten von vulkanisierten Materialbahnen (Mv.i);
- Überführen der vulkanisierten Materialbahnen (Mv.i) auf Ruhepositionen (7.i);
- Abkühlen und Ruhen der vulkanisierten Materialbahnen (Mv.i) und Fertigstellen der vulkanisierten Laufstreifen (100).

Erfindungsgemäß ist vorgesehen, dass die vulkanisierten Materialbahnen (Mv.i) über eine Führungs- und Stützvorrichtung (15.j) geführt und/oder gestützt werden, wobei die Führungs- und Stützvorrichtung (15.j)
- während des Überführens in die Ruheposition (7.i) in eine Führungsposition (PF) verstellt wird, in der ein Führungs- und Stützteil (16) der Führungs- und Stützvorrichtung (15.j) von oben auf die darunterliegende vulkanisierte Materialbahn (Mv.i) drückt, und/oder
- nach dem Überführen in die Ruheposition (7.i) in eine Stützposition (PS) verstellt wird, in der das Führungs- und Stützteil (16) der Führungs- und Stützvorrichtung (15.j) von unten an der darüberliegenden vulkanisierten Materialbahn (Mv.i) anliegt.

## Beschreibung

Die Erfindung betrifft ein Verfahren zum Herstellen eines Laufstreifens für eine Runderneuerung bzw. eine Kalterneuerung von Fahrzeugreifen, insbesondere von Fahrzeugreifen für Nutzfahrzeuge, sowie eine Herstellungsanlage zur Durchführung des Verfahrens.

Fahrzeugreifen weisen herkömmlicherweise eine radial oberhalb der Karkasse angeordnete Lauffläche auf, die sich im Betrieb des Fahrzeugreifens am schnellsten abnutzt, da sie den Übergang zum jeweiligen Untergrund bildet. Es sind Verfahren bekannt, eine sogenannte Runderneuerung bzw. eine Kaltrunderneuerung, in denen der nach dem Abrieb verbleibende Restlaufstreifen des jeweiligen Fahrzeugreifens, insbesondre Nutzfahrzeugreifens, durch Aufrauen abgetragen wird. Anschließend wird auf diese aufgeraute Oberfläche ein neuer vorvulkanisierter Laufstreifen aufgeklebt oder aufvulkanisiert, um einen runderneuerten Fahrzeugreifen, insbesondere Nutzfahrzeugreifen, zu erhalten, der im Rahmen einer weiteren Nutzung über eine bestimmte Lebensdauer weiter eingesetzt werden kann.

Zum Herstellen eines vorvulkanisierten Laufstreifens für eine Runderneuerung wird zunächst eine unvulkanisierte Materialbahn bereitgestellt, die beispielsweise eine Länge von ca. 10m aufweist. Die unvulkanisierte Materialbahn ist dabei aus den einzelnen Lagen des Laufstreifens aufgebaut, beispielsweise der Cap und der Base und weiteren Bestandteilen. In der Regel werden mehrere bereitgestellte unvulkanisierte Materialbahnen gleichzeitig von einer Transporteinheit mit mehreren Fördereinrichtungen, die in mehreren Etagen übereinanderliegen, bereitgestellt, wobei jede unvulkanisierte Materialbahn flächig auf einem Riemen der jeweiligen Fördereinrichtung aufliegt.

Benachbart zu der Transporteinheit ist eine Vulkanisierungseinheit vorgesehen, die in mehreren Etagen Vulkanisierungsformen aufweist, in denen die unvulkanisierten Materialbahnen jeweils durch Ausübung von Hitze und Druck vulkanisiert werden können. Um die Vulkanisierungsformen zu beladen, können die Fördereinrichtungen in einer Vorwärtsbewegung zusammen mit den unvulkanisierten Materialbahnen zunächst etagenweise in die geöffneten Vulkanisierungsformen verfahren werden. Bei einer anschließenden Rückbewegung bzw. Rückführung der Fördereinrichtungen werden die Riemen gleichzeitig angetrieben, so dass die darauf aufliegenden unvulkanisierten Materialbahnen etagenweise in die jeweiligen Vulkanisierungsformen geladen werden. Nach dem Beladen der unvulkanisierten Materialbahnen werden die Vulkanisierungsformen in den einzelnen Etagen geschlossen und der Vulkanisierungsprozess wird in jeder Vulkanisierungsform gestartet.

Nach der Beendigung des Vulkanisierungsprozesses werden die Vulkanisierungsformen wieder geöffnet und die dann vulkanisierten Materialbahnen werden in jeder einzelnen Etage von einer Entladevorrichtung in einen Ruhebereich gebracht. In dem Ruhebereich liegen die vulkanisierten Materialbahnen getrennt voneinander in mehreren Etagen übereinander auf Ruhepositionen auf. In dem Ruhebereich kühlen die vulkanisierten Materialbahnen aus und ruhen bzw. entspannen entsprechend, bevor sie anschließend beispielsweise zu einem vulkanisierten Laufstreifen zugeschnitten bzw. abgelängt werden, so dass sie anschließend auf die aufgeraute Oberfläche des abgenutzten Fahrzeugreifens aufgeklebt oder aufvulkanisiert werden können.

Nachteilig bei bisherigen Verfahren ist, dass die vulkanisierten Materialbahnen beim Entladen aus der Vulkanisierungsform oder nach dem Entladen aus der Vulkanisierungsform nicht straff bleiben und daher innerhalb der jeweiligen Etage des Ruhebereiches nicht über ihre komplette Länge plan in den Ruhepositionen liegen und/oder an vulkanisierten Materialbahnen aus benachbarten Etagen ungestützt anliegen und daher mit diesen während des Abkühlens zusammenkleben. Daher hat ein Bediener das Entladen aus den Vulkanisierungsformen in der Regel zu überwachen, um einen reibungslosen Prozess zu ermöglichen, was den Aufwand erhöht.

Zudem kann es auch beim etagenweisen Übertragen der unvulkanisierten Materialbahnen von den Fördereinrichtungen in die Vulkanisierungsformen während der Rückführung der Fördereinrichtungen zu unerwünschten Verschiebungen, Versetzungen oder gewellten oder ungleichmäßigen Positionierungen der jeweiligen unvulkanisierten Materialbahnen innerhalb der Vulkanisierungsformen kommen. Auch dafür ist in der Regel ein zusätzlicher Bediener zum Überwachen der Positionierung vorgesehen, um einen reibungslosen Prozess sicherzustellen.

Der folgenden Erfindung liegt daher die Aufgabe zugrunde, ein Verfahren und eine Herstellungsanlage anzugeben, mit denen ein sicherer Herstellungsprozess eines vulkanisierten Laufstreifens für eine Runderneuerung mit wenig Aufwand sicher erreicht werden kann.

Diese Aufgabe wird durch ein Verfahren und eine Herstellungsanlage gemäß den unabhängigen Ansprüchen gelöst. Die Unteransprüche geben bevorzugte Weiterbildungen an.

Demnach ist ein Verfahren zum Herstellen eines vulkanisierten Laufstreifens für eine Runderneuerung von Fahrzeugreifen, insbesondere von Fahrzeugreifen für Nutzfahrzeuge, in einer Herstellungsanlage mit mindestens zwei übereinanderliegenden Etagen vorgesehen, wobei die Herstellungsanlage zumindest eine Transporteinheit, eine Vulkanisierungseinheit und einen Ruhebereich aufweist, mit mindestens den folgenden Schritten:
- Bereitstellen von mindestens zwei unvulkanisierten Materialbahnen, beispielsweise aus einer Cap und einer Base und ggf. weiteren Bestandteilen, auf Fördereinrichtungen der Transporteinheit, wobei jede Fördereinrichtung in einer anderen Etage angeordnet ist und jede unvulkanisierte Materialbahn von einer anderen Fördereinrichtung getragen wird, und;
- Beladen der bereitgestellten unvulkanisierten Materialbahnen in Vulkanisierungsformen der Vulkanisierungseinheit, wobei jede Vulkanisierungsform auf einer anderen Etage angeordnet ist und jede innerhalb einer Etage bereitgestellte unvulkanisierte Materialbahn in eine Vulkanisierungsform in derselben Etage beladen wird;
- Schließen der Vulkanisierungsformen und Vulkanisieren der darin angeordneten bzw. darin eingeladenen unvulkanisierten Materialbahnen durch Ausüben von Hitze und Druck zum Erhalten von vulkanisierten Materialbahnen;
- Öffnen der Vulkanisierungsformen und Überführen der vulkanisierten Materialbahnen auf Ruhepositionen innerhalb des Ruhebereiches, wobei in jeder Etage des Ruhebereiches eine Ruheposition verläuft oder angeordnet ist und jede vulkanisierte Materialbahn unter Beibehaltung der Etage in die jeweilige Ruheposition überführt wird;
- Abkühlen und Ruhen der vulkanisierten Materialbahnen in der jeweiligen Ruheposition in der jeweiligen Etage und Fertigstellen der vulkanisierten Laufstreifen,
wobei die vulkanisierten Materialbahnen jeweils über eine Führungs- und Stützvorrichtung geführt und/oder gestützt werden, wobei die jeweilige Führungs- und Stützvorrichtung
- während des Überführens der jeweiligen vulkanisierten Materialbahn in die jeweilige Ruheposition in eine Führungsposition verstellt wird, in der ein Führungs- und Stützteil der jeweiligen Führungs- und Stützvorrichtung von oben auf die jeweilige darunterliegende vulkanisierte Materialbahn drückt, um diese zu führen, und/oder
- nach dem Überführen der jeweiligen vulkanisierten Materialbahn in die jeweilige Ruheposition in eine Stützposition verstellt wird, in der das Führungs- und Stützteil der jeweiligen Führungs- und Stützvorrichtung von unten an der jeweiligen darüberliegenden vulkanisierten Materialbahn anliegt, um diese von unten abzustützen.

Vorteilhafterweise wird also der Entladeprozess aus der jeweilige Vulkanisierungsform bzw. der Beladeprozess der jeweiligen Ruheposition optimiert, indem die jeweilige vulkanisierte Materialbahn durch das von oben andrückende Führungs- und Stützteil geführt wird. Beim Beladen der jeweiligen Ruheposition wird also dafür gesorgt, dass es zu keiner falschen Positionierung oder zu keinem zu starken Durchhängen der jeweiligen vulkanisierten Materialbahn kommt. Dies kann sonst zu einem Berühren von zwei in unterschiedlichen Etagen liegenden vulkanisierten Materialbahnen führen, was unerwünscht ist, da diese sonst aneinanderkleben.

Die ergänzende Möglichkeit, die jeweilige vulkanisierte Materialbahn durch das von unten anliegende Führungs- und Stützteil zu stützen, hat insbesondere den Vorteil, dass die Randbereiche der jeweiligen vulkanisierten Materialbahn nicht nach unten wegklappen können und dadurch eine Berührung und ein Zusammenkleben von benachbarten vulkanisierten Materialbahnen in einfacher Weise verhindert werden kann.

Erfindungsgemäß ist auch eine Herstellungsanlage zum Herstellen eines vulkanisierten Laufstreifens für eine Runderneuerung von Fahrzeugreifen, insbesondere von Fahrzeugreifen für Nutzfahrzeuge, insbesondere zur Durchführung des erfindungsgemäßen Verfahrens, mit mindestens zwei Etagen vorgesehen, wobei die Herstellungsanlage mindestens aufweist:
- die Transporteinheit mit Fördereinrichtungen jeweils zum Bereitstellen und Tragen von unvulkanisierten Materialbahnen, wobei jede Fördereinrichtung in einer anderen Etage angeordnet ist;
- eine Vulkanisierungseinheit mit Vulkanisierungsformen jeweils zum Vulkanisieren der bereitgestellten unvulkanisierten Materialbahnen, wobei jede Vulkanisierungsform auf einer anderen Etage angeordnet ist;
- den Ruhebereich mit Ruhepositionen zum Abkühlen und Ruhen von in der Vulkanisierungseinheit vulkanisierten Materialbahnen, wobei in jeder Etage des Ruhebereiches eine Ruheposition verläuft oder angeordnet ist; und
- eine Entladevorrichtung zum Überführen der vulkanisierten Materialbahnen aus den Vulkanisierungsformen in die jeweilige Ruheposition unter Beibehaltung der Etage, beispielsweise über Greifvorrichtungen oder dergleichen,
wobei weiterhin Führungs- und Stützvorrichtungen jeweils mit einem verstellbaren Führungs- und Stützteil, beispielsweise in Form von Rollen oder Andruckstiften oder dergleichen, vorgesehen sind zum Führen und/oder Stützen der vulkanisierten Materialbahnen, wobei die jeweilige Führungs- und Stützvorrichtung
- während des Überführens der jeweiligen vulkanisierten Materialbahn in die jeweilige Ruheposition in eine Führungsposition verstellt werden kann, in der das Führungs- und Stützteil der jeweiligen Führungs- und Stützvorrichtung ausgebildet ist, von oben auf die jeweilige darunterliegende vulkanisierte Materialbahn zu drücken, um diese zu führen, und/oder
- nach dem Überführen der jeweiligen vulkanisierten Materialbahn in die jeweilige Ruheposition in eine Stützposition verstellt werden kann, in der das Führungs- und Stützteil der jeweiligen Führungs- und Stützvorrichtung ausgebildet ist, von unten an der jeweiligen darüberliegenden vulkanisierten Materialbahn anzuliegen, um diese von unten abzustützen.

Vorzugsweise ist weiterhin vorgesehen, dass das Führungs- und Stützteil der jeweiligen Führungs- und Stützvorrichtung durch einen elektrisch und/oder mechanisch und/oder pneumatisch und/oder hydraulisch wirkenden Aktuator
- während des Überführens der jeweiligen vulkanisierten Materialbahn in die jeweilige Ruheposition in Richtung einer unterhalb des Führungs- und Stützteils verlaufenden vulkanisierten Materialbahn verstellt wird, und/oder
- nach dem Überführen der jeweiligen vulkanisierten Materialbahn in die jeweilige Ruheposition in Richtung einer oberhalb des Führungs- und Stützteils verlaufenden vulkanisierten Materialbahn verstellt wird, beispielsweise durch eine translatorische und/oder eine rotatorische Bewegung des jeweiligen Führungs- und Stützteils.

Demnach wird eine einfache Verstellung in die jeweilige Position ermöglicht, wobei dies für alle Führungs- und Stützvorrichtung über einen einzelnen kombinierten Aktuator erfolgen kann, so dass alle Führungs- und Stützvorrichtungen gleichzeitig verstellt werden, oder jeder Führungs- und Stützvorrichtung ein eigener Aktuator zugeordnet ist, so dass jede Führungs- und Stützvorrichtung individuell verstellt werden kann.

Dabei ist vorzugsweise weiterhin vorgesehen, dass jeder Führungs- und Stützvorrichtung zwei übereinanderliegende Etagen zugeordnet sind, wobei das Führungs- und Stützteil der jeweiligen Führungs- und Stützvorrichtung in der Führungsposition gegen die vulkanisierte Materialbahn in der Etage unterhalb des Führungs- und Stützteils drückt und in der Stützposition die vulkanisierte Materialbahn in der Etage oberhalb des Führungs- und Stützteils abstützt. Es sind also nicht zwangsläufig für jede Etage zwei Führungs- und Stützvorrichtungen nötig, um sowohl das Führen als auch das Abstützen zu erreichen. Vielmehr kann das Führungs- und Stützteil der jeweiligen Führungs- und Stützvorrichtung beispielsweise in einem Übergangsbereich zwischen den Vulkanisierungsformen und den Ruhepositionen angeordnet sein, wobei das jeweilige Führungs- und Stützteil beispielsweise über ein Befestigungsteil an der Vulkanisierungseinheit oder in dem Ruhebereich oder an der Entladevorrichtung oder separat dazu angebracht ist, um dann in der jeweiligen Position entweder in der einen (obenliegenden) Etage die Stützfunktion zu gewährleisten oder in der anderen (darunterliegenden) Etage die Führungsfunktion umzusetzen. Dadurch kann durch eine Führungs- und Stützvorrichtung eine Doppelfunktion erreicht werden.

Vorzugsweise ist weiterhin vorgesehen, dass das Beladen der bereitgestellten unvulkanisierten Materialbahnen in die Vulkanisierungsformen der Vulkanisierungseinheit dadurch erfolgt, dass die in einer bestimmten Etage angeordnete Fördereinrichtung in einer Vorwärtsbewegung zwischen ein Oberteil und ein Unterteil der in derselben Etage angeordneten geöffneten Vulkanisierungsform verfahren wird und die von der jeweiligen Fördereinrichtung getragene unvulkanisierte Materialbahn während einer anschließenden Rückführung oder Rückwärtsbewegung (entgegen der Vorwärtsbewegung) der jeweiligen Fördereinrichtung in die jeweilige Vulkanisierungsform abgelegt wird.

Auf diese Weise sind keine zusätzlichen Greifvorrichtungen oder dergleichen nötig, um die unvulkanisierte Material in die jeweilige Vulkanisierungsform zu laden. Vielmehr kann beispielsweise vorgesehen sein, dass zum Ablegen der unvulkanisierten Materialbahn in die jeweilige Vulkanisierungsform ein Riemen der jeweiligen Fördereinrichtung, auf dem die unvulkanisierte Materialbahn (Mu.i) flächig aufliegt, angetrieben wird, wobei ein Betrag einer Antriebsgeschwindigkeit des jeweiligen Riemens in etwa einer Rückführgeschwindigkeit (bzw. in etwa einem additiv Inversen der Rückführgeschwindigkeit) der jeweiligen Fördereinrichtung entspricht. Auf diese Weise wird ein einfaches Beladen gewährleistet.

Vorzugsweise kann dann weiterhin vorgesehen sein, dass ein Randbereich der von der jeweiligen Fördereinrichtung getragenen unvulkanisierten Materialbahn während der Rückführung der jeweiligen Fördereinrichtung von einer Andruckvorrichtung, beispielsweise einer Rolle, einer Platte, einem Haltearm, einer Klemme oder dergleichen, gegen das Unterteil der jeweiligen Vulkanisierungsform gedrückt wird, beispielsweise über einen entsprechende Aktuator. Auf diese Weise kann bei der Rückführung der jeweiligen Fordereinrichtung ein unbeabsichtigtes Zurückziehen der unvulkanisierte Materialbahn zusammen mit der rückgeführten Fordereinrichtung vermieden werden. Zudem strafft sich die unvulkanisierte Materialbahn in der jeweiligen Vulkanisierungsform und ein zentrales Positionieren wird vereinfacht.

Vorzugsweise ist weiterhin vorgesehen, dass das jeweilige Führungs- und Stützteil durch eine rotatorische und/oder eine translatorische Bewegung in die Führungsposition und/oder die Stützposition gebracht werden kann. Auch die Andruckvorrichtung kann durch eine entsprechende rotatorische und/oder translatorische Bewegung entsprechend positioniert und angedrückt werden. Auf diese Weise wird eine einfache Umsetzung der jeweils gewünschten Bewegung mit der jeweiligen Andruckkraft erreicht.

Vorzugsweise ist dabei vorgesehen, dass das Führungs- und Stützteil der jeweiligen Führungs- und Stützvorrichtung mit einem Aktuator zusammenwirkt, vorzugsweise einem elektrisch und/oder mechanisch und/oder pneumatisch und/oder hydraulisch wirkenden Aktuator, der ausgebildet ist, das jeweilige Führungs- und Stützteil
- in der Führungsposition in Richtung einer unterhalb des Führungs- und Stützteils verlaufenden vulkanisierten Materialbahn zu verstellen, beispielsweise zu verdrehen und/oder zu verschieben, und/oder
- in der Stützposition in Richtung einer oberhalb des Führungs- und Stützteils verlaufenden vulkanisierten Materialbahn zu verstellen, beispielsweise zu verdrehen und/oder zu verschieben.

Der Aktuator ermöglicht eine einfache Ansteuerung in der jeweiligen Situation, um die jeweilige Position einzustellen. In vergleichbarer Weise kann dies auch für die Andruckvorrichtungen erfolgen.

In den Zeichnungen zeigen:
- Fig. 1: eine Herstellungsanlage zur Herstellung eines vulkanisierten Laufstreifens für eine Runderneuerung;
- Fig. 2A, 2B: Detailansichten einer Andruckvorrichtung; und
- Fig. 3A, 3B: Detailansichten von Führungs- und Stützvorrichtungen.

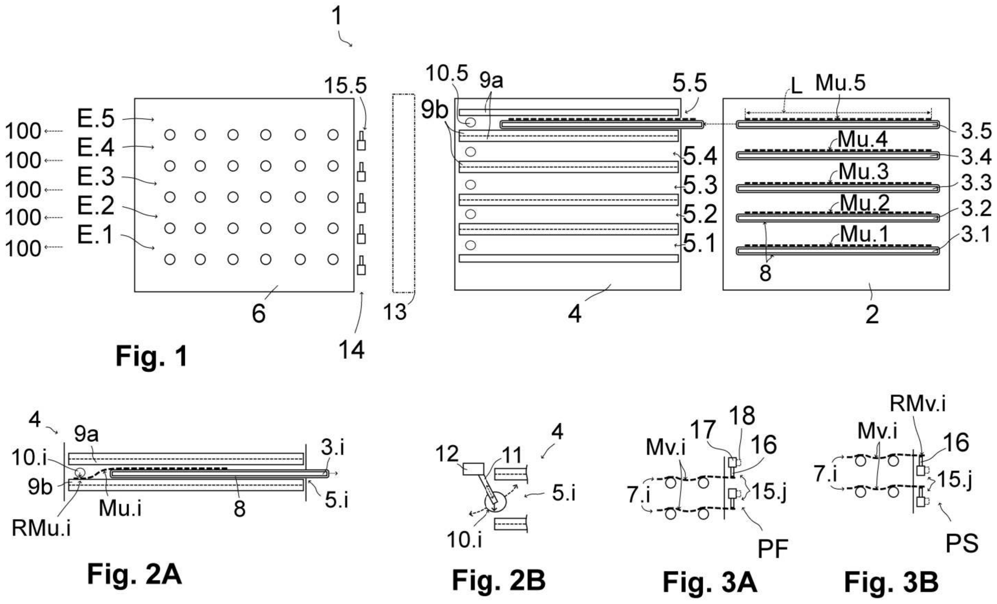

Figur 1 zeigt eine Herstellungsanlage 1, die zumindest eine Transporteinheit 2 mit mehreren Fördereinrichtungen 3.i, eine Vulkanisierungseinheit 4 mit mehreren Vulkanisierungsformen 5.i und einem Ruhebereich 6 mit mehreren Ruhepositionen 7.i aufweist. Die Herstellungsanlage 1 weist weitere (nicht dargestellte) Bestandteile auf, beispielsweise eine Abläng-Vorrichtung, um entsprechend abgelängte vulkanisierte Laufstreifen 100 bereitstellen zu können.

Die Fördereinrichtungen 3.i, die Vulkanisierungsformen 5.i und die Ruhepositionen 7.i sind innerhalb ihrer jeweiligen Einheit/Bereich 2, 4, 6 in einer Anzahl N an Etagen E.i, mit i=1,...,N (hier beispielhaft N=5) angeordnet, um eine Herstellung wie nachfolgend beschrieben zu ermöglichen:
Über die Transporteinheit 2 werden zunächst mehrere unvulkanisierte Materialbahnen Mu.i bereitgestellt, wobei jeweils eine unvulkanisierte Materialbahn Mu.i pro Etage E.i auf einem Riemen 8 der jeweiligen Fördereinrichtung 3.i aufliegt. Die unvulkanisierten Materialbahnen Mu.i weisen dabei beispielsweise jeweils eine Länge L von ca. 10m auf und sind jeweils aus den einzelnen Lagen des zu vulkanisierenden Laufstreifens 100 aufgebaut, beispielsweise der Cap und der Base und ggf. weiteren Bestandteilen.

Die Fördereinrichtungen 3.i in den einzelnen Etagen E.i können wie in Fig. 1 durch den gestrichelten Pfeil für die fünfte Etage E.5 angedeutet in einer Vorwärtsbewegung in Richtung der Vulkanisierungseinheit 4 bewegt bzw. verfahren werden, beispielsweise über Rollen. Die einzelnen Vulkanisierungsformen 5.i sind dazu in diesem Stadium in ihre geöffnete Stellung gebracht, so dass die Fördereinrichtungen 3.i mit den unvulkanisierten Materialbahnen Mu.i zwischen ein Oberteil 9a und ein Unterteil 9b der jeweiligen Vulkanisierungsform 5.i in der jeweiligen Etage E.i verfahren werden können. Dabei kann ein Oberteil 9a einer bestimmten Vulkanisierungsform 5.i einer Etage E.i gleichzeitig das Unterteil 9b der darüberliegenden Vulkanisierungsform 5.(i+1) sein und umgedreht.

Nachdem die Fördereinrichtungen 3.i in den einzelnen Etagen E.i in die jeweilige Vulkanisierungsform 5.i verfahren sind, werden diese in einer Rückwärtsbewegung bzw. durch eine Rückführung wieder aus der Vulkanisierungsform 5.i verfahren, während die Riemen 8 der Fördereinrichtungen 3.i jeweils gleichzeitig angetrieben werden, so dass die darauf aufliegenden unvulkanisierten Materialbahnen Mu.i von den Riemen 8 in die jeweilige Vulkanisierungsform 5.i geladen werden. Dazu entspricht die Antriebsgeschwindigkeit des jeweiligen Riemens 8 vom Betrag her in etwa der Rückführgeschwindigkeit der jeweiligen Fördereinrichtung 3.i, jedoch mit anderem Vorzeichen.

Um dabei zu gewährleisten, dass die unvulkanisierten Materialbahnen Mu.i plan und zentriert innerhalb der Vulkanisierungsform 5.i zwischen dem Oberteil 9a und dem Unterteil 9b positioniert werden und auch nicht von den sich mit der rückgeführten Fördereinrichtung 3.i mitbewegenden Riemen 8 mitgezogen werden und sich dadurch ein Versatz oder eine falsche Positionierung innerhalb der Vulkanisierungsform 5.i ergibt, ist jeder Etage E.i eine Andruckvorrichtung 10.i zugeordnet. Dies ist in Fig. 1 und für eine beliebige Etage E.i in einer Detaildarstellung in Fig. 2A dargestellt. Die Andruckvorrichtungen 10.i sind dabei in beliebiger Weise beispielsweise an der Vulkanisierungseinheit 4 angeordnet.

Die Andruckvorrichtungen 10.i zeichnen sich jeweils dadurch aus, dass sie während einer Rückführung der jeweiligen Fördereinrichtung 3.i in der jeweiligen Etage E.i von oben mit einer bestimmten Andruckkraft auf einen Randbereich RMu.i der jeweiligen unvulkanisierten Materialbahn Mu.i drücken und diesen dadurch gegen das Unterteil 9b der jeweiligen Vulkanisierungsform 5.i pressen. Dadurch wird sichergestellt, dass die jeweilige unvulkanisierte Materialbahn Mu.i nicht von dem Riemen 8 zurückgezogen wird und sich diese zudem spannt und dadurch nahezu plan und ohne Versetzungen in der jeweiligen Vulkanisierungsform 5.i positioniert wird. Bevor die Vulkanisierungsformen 5.i geschlossen werden, werden die Andruckvorrichtungen 10.i aus dem Zwischenraum zwischen dem Oberteil 9a und dem Unterteil 9b entfernt, so dass diese zusammengeführt werden können, um die jeweilige unvulkanisierte Materialbahn Mu.i dazwischen einzuschließen.

Die Andruckvorrichtungen 10.i können dabei als Rollen (wie dargestellt), Platten, Haltearme, Klemmen oder dergleichen ausgeführt sein, die über eine entsprechende Mechanik, wie in Fig. 2B beispielsweise einen Schaft 11, die mit einem Aktuator 12, beispielsweise einem mechanischen und/oder hydraulischen und/oder pneumatischen und/oder elektrischen Aktuator, zusammenwirkt, mit einer Kraft belastet werden kann. Über die Mechanik und den Aktuator 12 kann die jeweilige Andruckvorrichtung 10.i vor dem Schließen der Vulkanisierungsformen 5.i auch aus der jeweiligen Vulkanisierungsform 5.i entfernt werden, beispielsweise durch eine translatorische und/oder eine rotatorische Bewegung, wie in Fig. 2B gestrichelt angedeutet. Es sind aber auch andere Mechaniken möglich, um ein Andrücken und ein Bewegen der Andruckvorrichtungen 10.i wie beschrieben zu ermöglichen.

Auf diese Weise kann ein automatisiertes Beladen der Vulkanisierungsformen 5.i ohne oder mit nur geringem manuellen Überwachungsaufwand gewährleistet werden.

In den Vulkanisierungsformen 5.i werden die unvulkanisierten Materialbahnen Mu.i im verschlossenen Zustand durch Ausübung von Hitze und Druck vulkanisiert, so dass vulkanisierte Materialbahnen Mv.i ausgebildet werden. Nach der Beendigung des Vulkanisierungsprozesses werden die Vulkanisierungsformen 5.i wieder geöffnet, d.h. die Oberteile 9a und Unterteile 9b wieder auseinandergefahren.

Über eine Entladevorrichtung 13 werden die vulkanisierten Materialbahnen Mv.i anschließend in jeder einzelnen Etage E.i aus den Vulkanisierungsformen 5.i in den Ruhebereich 6 gebracht und dort in der jeweiligen Etage E.i auf die einzelnen Ruhepositionen 7.i, die beispielsweise jeweils durch mehrere horizontal nebeneinander angeordnete Stäbe oder dergleichen gebildet werden, aufgelegt. Die Entladevorrichtung 13, die in Fig. 1 lediglich schematisiert angedeutet ist, weist beispielsweise Greifer oder Träger oder dergleichen auf, über die die einzelnen vulkanisierten Materialbahnen Mv.i entladen und zu den Ruhepositionen 7.i transportiert und dort aufgelegt werden. In dem Ruhebereich 6 liegen die vulkanisierten Materialbahnen Mv.i dann getrennt voneinander in den mehreren Etagen E.i übereinander und können auf den jeweiligen Ruhepositionen 7.i auskühlen und ruhen bzw. entspannen.

Um bei diesem Übertragen oder Transportieren der frisch vulkanisierten Materialbahnen Mv.i zu vermeiden, dass sich übereinanderliegende vulkanisierte Materialbahnen Mv.i berühren, beispielsweise in nicht ausreichend abgestützten oder durchhängenden Bereichen, sind eine Anzahl M an Führungs- und Stützvorrichtungen 15.j, mit j=1,...,M=N+1, vorgesehen. Die Führungs- und Stützvorrichtungen 15.j sind in einem Übergangsbereich 14 zwischen den Ruhepositionen 7.i und den Vulkanisierungsformen 5.i positioniert, wie in Fig. 1 und in Detailansichten in den Figuren 3A und 3B dargestellt. Die Anzahl M an Führungs- und Stützvorrichtungen 15.j ist dabei aus den nachfolgend beschriebenen Gründen vorzugsweise um 1 höher als die Anzahl N an Etagen E.i:
Die Führungs- und Stützvorrichtungen 15.j können jeweils gezielt zwischen einer Stützposition PS und einer Führungsposition PF verstellt werden. Sie weisen jeweils ein Führungs- und Stützteil 16 auf, das in der Führungsposition PF, die beispielhaft in Fig. 3A dargestellt ist, von oben auf die in die jeweilige Ruheposition 7.i transportierte vulkanisierte Materialbahn Mv.i drückt. In der Stützposition PS, die in Fig. 3B dargestellt ist, stützt das Führungs- und Stützteil 16 eine darüberliegende vulkanisierte Materialbahn Mv.i von unten ab.

In der dargestellten Ausführungsform kann also das Führungs- und Stützteil 16 zwischen einer nach unten gerichteten Position (Führungsposition PF) und einer nach oben gerichteten Position (Stützposition PS) verstellt werden. Dazu können die Führungs- und Stützvorrichtungen 15.j beispielsweise jeweils ein Befestigungsteil 17 aufweisen, das drehbar an der Vulkanisierungseinheit 4 oder an dem Ruhebereich 6 oder an der Entladevorrichtung 13 oder auch separat dazu angeordnet ist. Von dem Befestigungsteil 17 ragt das Führungs- und Stützteil 16 beispielsweise stegartig ab, so dass sich dessen Lage bei einer Drehung des Befestigungsteils 17 zwischen der Stützposition PS und der Führungsposition PF verändert. Die Drehung des Befestigungsteils 17 kann durch einen beliebigen Antrieb 18 (Mechanik und/oder Hydraulik und/oder Pneumatik und/oder Elektrik) gewährleistet werden, der in beliebiger Weise mit dem Befestigungsteil 17 zusammenwirkt.

In weiteren Ausführungsformen können auch andere Arten von Führungs- und Stützteilen 16 vorgesehen sein, beispielsweise Andruckstifte oder Rollen oder dergleichen. Auch die Verstellung der jeweiligen Führungs- und Stützteile 16 zwischen der Stützposition PS und der Führungsposition PF kann auf andere Weise erfolgen, beispielsweise stattdessen oder ergänzend translatorisch über eine Mechanik und/oder eine Hydraulik und/oder eine Pneumatik und/oder eine Elektrik.

In jeglichen Ausführungsformen ist demnach vorgesehen, dass einer bestimmten Führungs- und Abstützvorrichtung 15.j zwei übereinanderliegende Etagen E.i zugeordnet sind, wobei in der unteren zugeordneten Etage E.i eine Führungsfunktion (in der Führungsposition PF) umgesetzt wird und in einer oberen zugeordneten Etage E.i eine Stützfunktion (in der Stützposition PS) umgesetzt wird. Um in jeder Etage E.i eine solche Führungs- und Stützfunktion umsetzen zu können, ist die Anzahl M der Führungs- und Abstützvorrichtungen 15.j um eins größer als die Anzahl N der Etagen E.i.

Die Führungsfunktion ergibt sich dadurch, dass die jeweilige vulkanisierte Materialbahn Mv.i während des Beladens auf die jeweilige Ruheposition 7.i gleichzeitig durch das Führungs- und Stützteil 16 nach unten gedrückt wird, wodurch sie sich strafft und trotz des Eigengewichtes nicht zu sehr nach unten durchhängt und auch sonstige ungewünschte Verschiebungen oder asymmetrische Positionierungen vermieden werden. Die Führungsposition PF wird demnach durch eine gezielte Ansteuerung des jeweiligen Antriebs 18 während des Beladens auf die jeweilige Ruheposition 7.i eingestellt. Die Stützfunktion ergibt sich dadurch, dass nach dem Beladen auf die jeweilige Ruheposition 7.i insbesondere die Randbereiche RMv.i der vulkanisierten Materialbahn Mv.i abgestützt werden können, so dass sie nicht nach unten abknicken. Die Stützposition PS wird also durch eine gezielte Ansteuerung des jeweiligen Antriebs 18 eingestellt, nachdem die vulkanisierte Materialbahn Mv.i auf die jeweilige Ruheposition 7.i geladen wurde und erkaltet und ruht.

In beiden Positionen PS, PF wird demnach vermieden, dass übereinanderliegende vulkanisierte Materialbahnen Mv.i durch ein zu starkes Durchhängen oder nach unten Abknicken während des Abkühlens und Entspannens zusammenkleben. Zudem wird eine sichere Positionierung gewährleistet, um einen problemfreien Abkühlungsprozess sicherzustellen.

Nachdem die vulkanisierten Materialbahnen Mv.i erkaltet und entspannt sind, werden sie anschließend beispielsweise zu dem vulkanisierten Laufstreifen 100 zugeschnitten bzw. abgelängt. Werden von der Transporteinheit 2 unvulkanisierte Materialbahnen Mu.i bereitgestellt, die bereits auf die entsprechende Länge des späteren Laufstreifens zugeschnitten sind, so kann dieser Schritt auch entfallen. In der Regel findet ein Zuschneiden jedoch erst nach der Vulkanisierung statt.

Anschließend kann der so vulkanisierte Laufstreifen 100 zur Runderneuerung auf die vorher aufgeraute Oberfläche des abgenutzten Fahrzeugreifens aufgeklebt oder aufvulkanisiert werden, um den runderneuerten Fahrzeugreifen fertigzustellen.

### Bezugszeichenliste

- 1: Herstellungsanlage
- 2: Transporteinheit
- 3.i: i. Fördereinrichtung
- 4: Vulkanisierungseinheit
- 5.i: i. Vulkanisierungsform
- 6: Ruhebereich
- 7.i: i. Ruheposition
- 8: Riemen
- 9a: Oberteil der Vulkanisierungsform 5.i
- 9b: Unterteil der Vulkanisierungsform 5.i
- 10.i: i. Andruckvorrichtung
- 11: Schaft
- 12: Aktuator
- 13: Entladevorrichtung
- 14: Übergangsbereich
- 15.j: Führungs- und Stützvorrichtungen
- 16: Führungs- und Stützteil
- 17: Befestigungsteil
- 18: Antrieb
- 100: vulkanisierter Laufstreifen

- E.i: i. Etage
- L: Länge der unvulkanisierten Materialbahn Mu.i
- Mu.i: i. unvulkanisierte Materialbahn
- Mv.i: i. vulkanisierte Materialbahn
- PF: Führungsposition
- PS: Stützposition
- RMu.i: Randbereich der i. unvulkanisierten Materialbahn Mu.i
- RMv.i: Randbereich der i. vulkanisierten Materialbahn Mv.i
- N: Anzahl von Etagen E.i
- M: Anzahl an Führungs- und Abstützvorrichtungen 15.j

## Patentansprüche

1. Verfahren zum Herstellen eines vulkanisierten Laufstreifens (100) für eine Runderneuerung von Fahrzeugreifen, insbesondere von Fahrzeugreifen für Nutzfahrzeuge, in einer Herstellungsanlage (1) mit mindestens zwei übereinanderliegenden Etagen (E.i), wobei die Herstellungsanlage (1) zumindest eine Transporteinheit (2), eine Vulkanisierungseinheit (4) und einen Ruhebereich (6) aufweist, mit mindestens den folgenden Schritten:
- Bereitstellen von mindestens zwei unvulkanisierten Materialbahnen (Mu.i) auf Fördereinrichtungen (3.i) der Transporteinheit (2), wobei jede Fördereinrichtung (3.i) in einer anderen Etage (E.i) angeordnet ist und jede unvulkanisierte Materialbahn (Mu.i) von einer anderen Fördereinrichtung (3.i) getragen wird;
- Beladen der bereitgestellten unvulkanisierten Materialbahnen (Mu.i) in Vulkanisierungsformen (5.i) der Vulkanisierungseinheit (4), wobei jede Vulkanisierungsform (5.i) auf einer anderen Etage (E.i) angeordnet ist und jede innerhalb einer Etage (E.i) bereitgestellte unvulkanisierte Materialbahn (Mu.i) in eine Vulkanisierungsform (5.i) in derselben Etage (E.i) beladen wird;
- Schließen der Vulkanisierungsformen (5.i) und Vulkanisieren der darin angeordneten unvulkanisierten Materialbahnen (Mu.i) zum Erhalten von vulkanisierten Materialbahnen (Mv.i);
- Öffnen der Vulkanisierungsformen (5.i) und Überführen der vulkanisierten Materialbahnen (Mv.i) auf Ruhepositionen (7.i) innerhalb des Ruhebereiches (6), wobei in jeder Etage (E.i) des Ruhebereiches (6) eine Ruheposition (7.i) verläuft und jede vulkanisierte Materialbahn (Mv.i) unter Beibehaltung der Etage (E.i) in die jeweilige Ruheposition (7.i) überführt wird;
- Abkühlen und Ruhen der vulkanisierten Materialbahnen (Mv.i) in der jeweiligen Ruheposition (7.i) und Fertigstellen der vulkanisierten Laufstreifen (100), **dadurch gekennzeichnet, dass**
die vulkanisierten Materialbahnen (Mv.i) jeweils über eine Führungs- und Stützvorrichtung (15.j) geführt und/oder gestützt werden, wobei die jeweilige Führungs- und Stützvorrichtung (15.j)
- während des Überführens der jeweiligen vulkanisierten Materialbahn (Mv.i) in die jeweilige Ruheposition (7.i) in eine Führungsposition (PF) verstellt wird, in der ein Führungs- und Stützteil (16) der jeweiligen Führungs- und Stützvorrichtung (15.j) von oben auf die jeweilige darunterliegende vulkanisierte Materialbahn (Mv.i) drückt, um diese zu führen, und/oder
- nach dem Überführen der jeweiligen vulkanisierten Materialbahn (Mv.i) in die jeweilige Ruheposition (7.i) in eine Stützposition (PS) verstellt wird, in der das Führungs- und Stützteil (16) der jeweiligen Führungs- und Stützvorrichtung (15.j) von unten an der jeweiligen darüberliegenden vulkanisierten Materialbahn (Mv.i) anliegt, um diese von unten abzustützen.

2. Verfahren nach Anspruch 1,
**dadurch gekennzeichnet, dass**
das Führungs- und Stützteil (16) der jeweiligen Führungs- und Stützvorrichtung (15.j) durch einen elektrisch und/oder mechanisch und/oder pneumatisch und/oder hydraulisch wirkenden Aktuator (18)
- während des Überführens der jeweiligen vulkanisierten Materialbahn (Mv.i) in die jeweilige Ruheposition (7.i) in Richtung einer unterhalb des Führungs- und Stützteils (16) verlaufenden vulkanisierten Materialbahn (Mv.i) verstellt wird, und/oder
- nach dem Überführen der jeweiligen vulkanisierten Materialbahn (Mv.i) in die jeweilige Ruheposition (7.i) in Richtung einer oberhalb des Führungs- und Stützteils (16) verlaufenden vulkanisierten Materialbahn (Mv.i) verstellt wird, beispielsweise durch eine translatorische und/oder eine rotatorische Bewegung des jeweiligen Führungs- und Stützteils (16).

3. Verfahren nach Anspruch 1 oder 2,
**dadurch gekennzeichnet, dass**
jeder Führungs- und Stützvorrichtung (15.j) zwei übereinanderliegende Etagen (E.i) zugeordnet sind, wobei das Führungs- und Stützteil (16) der jeweiligen Führungs- und Stützvorrichtung (15.j) in der Führungsposition (PF) gegen die vulkanisierte Materialbahn (Mv.i) in einer Etage (E.i) unterhalb des Führungs- und Stützteils (16) drückt und in der Stützposition (PS) die vulkanisierte Materialbahn (Mv.i) in einer anderen Etage (E.i) oberhalb des Führungs- und Stützteils (16) abstützt.

4. Verfahren nach einem der vorhergehenden Ansprüche,
**dadurch gekennzeichnet, dass**
das Beladen der bereitgestellten unvulkanisierten Materialbahnen (Mu.i) in die Vulkanisierungsformen (5.i) der Vulkanisierungseinheit (4) dadurch erfolgt, dass die in einer bestimmten Etage (E.i) angeordnete Fördereinrichtung (3.i) in einer Vorwärtsbewegung zwischen ein Oberteil (9a) und ein Unterteil (9b) der in derselben Etage (E.i) angeordneten geöffneten Vulkanisierungsform (5.i) verfahren wird und die von der jeweiligen Fördereinrichtung (3.i) getragene unvulkanisierte Materialbahn (Mu.i) während einer anschließenden Rückführung der jeweiligen Fördereinrichtung (3.i) in die jeweilige Vulkanisierungsform (5.i) abgelegt wird.

5. Verfahren nach Anspruch 4,
**dadurch gekennzeichnet, dass**
zum Ablegen der unvulkanisierten Materialbahn (Mu.i) in die jeweilige Vulkanisierungsform (5.i) ein Riemen (8) der jeweiligen Fördereinrichtung (3.i), auf dem die unvulkanisierte Materialbahn (Mu.i) aufliegt, angetrieben wird, wobei ein Betrag einer Antriebsgeschwindigkeit des jeweiligen Riemens (8) in etwa einer Rückführgeschwindigkeit der jeweiligen Fördereinrichtung (3.i) entspricht.

6. Verfahren nach Anspruch 4 oder 5,
**dadurch gekennzeichnet, dass**
ein Randbereich (RMu.i) der von der jeweiligen Fördereinrichtung (3.i) getragenen unvulkanisierten Materialbahn (Mu.i) während der Rückführung der jeweiligen Fördereinrichtung (3.i) von einer Andruckvorrichtung (10.i) gegen das Unterteil (9b) der jeweiligen Vulkanisierungsform (5.i) gedrückt wird.

7. Herstellungsanlage (1) zum Herstellen eines vulkanisierten Laufstreifens (100) für eine Runderneuerung von Fahrzeugreifen, insbesondere von Fahrzeugreifen für Nutzfahrzeuge, insbesondere zur Durchführung eines Verfahrens nach einem der vorhergehenden Ansprüche, mit mindestens zwei Etagen (E.i), mindestens aufweisend:
- eine Transporteinheit (2) mit Fördereinrichtungen (3.i) jeweils zum Bereitstellen und Tragen von unvulkanisierten Materialbahnen (Mu.i), wobei jede Fördereinrichtung (E.i) in einer anderen Etage (E.i) angeordnet ist;
- eine Vulkanisierungseinheit (4) mit Vulkanisierungsformen (5.i) jeweils zum Vulkanisieren der bereitgestellten unvulkanisierten Materialbahnen (Mu.i), wobei jede Vulkanisierungsform (5.i) auf einer anderen Etage (E.i) angeordnet ist;
- einen Ruhebereich (6) mit Ruhepositionen (7.i) zum Abkühlen und Ruhen von in der Vulkanisierungseinheit (4) vulkanisierten Materialbahnen (Mv.i), wobei in jeder Etage (E.i) des Ruhebereiches (6) eine Ruheposition (7.i) verläuft; und
- eine Entladevorrichtung (13) zum Überführen der vulkanisierten Materialbahnen (Mv.i) aus den Vulkanisierungsformen (5.i) in die jeweilige Ruheposition (7.i) unter Beibehaltung der Etage (E.i),
**dadurch gekennzeichnet, dass**
weiterhin Führungs- und Stützvorrichtungen (15.j) jeweils mit einem verstellbaren Führungs- und Stützteil (16) vorgesehen sind zum Führen und/oder Stützen der vulkanisierten Materialbahnen (Mv.i), wobei die jeweilige Führungs- und Stützvorrichtung (15.j)
- während des Überführens der jeweiligen vulkanisierten Materialbahn (Mv.i) in die jeweilige Ruheposition (7.i) in eine Führungsposition (PF) verstellt werden kann, in der das Führungs- und Stützteil (16) der jeweiligen Führungs- und Stützvorrichtung (15.j) ausgebildet ist, von oben auf die jeweilige darunterliegende vulkanisierte Materialbahn (Mv.i) zu drücken, um diese zu führen, und/oder
- nach dem Überführen der jeweiligen vulkanisierten Materialbahn (Mv.i) in die jeweilige Ruheposition (7.i) in eine Stützposition (PS) verstellt werden kann, in der das Führungs- und Stützteil (16) der jeweiligen Führungs- und Stützvorrichtung (15.j) ausgebildet ist, von unten an der jeweiligen darüberliegenden vulkanisierten Materialbahn (Mv.i) anzuliegen, um diese von unten abzustützen.

8. Herstellungsanlage (1) nach Anspruch 7,
**dadurch gekennzeichnet, dass**
das Führungs- und Stützteil (16) der jeweiligen Führungs- und Stützvorrichtung (15.j) in einem Übergangsbereich (14) zwischen den Vulkanisierungsformen (5.i) und den Ruhepositionen (7.i) angeordnet ist, wobei das jeweilige Führungs- und Stützteil (16) beispielsweise über ein Befestigungsteil (17) an der Vulkanisierungseinheit (4) oder in dem Ruhebereich (6) oder an der Entladevorrichtung (13) oder separat dazu angebracht ist.

9. Herstellungsanlage (1) nach Anspruch 7 oder 8,
**dadurch gekennzeichnet, dass**
das jeweilige Führungs- und Stützteil (16) durch eine rotatorische und/oder eine translatorische Bewegung in die Führungsposition (PF) und/oder die Stützposition (PS) gebracht werden kann.

10. Herstellungsanlage (1) nach Anspruch 9,
**dadurch gekennzeichnet, dass**
das Führungs- und Stützteil (16) der jeweiligen Führungs- und Stützvorrichtung (15.j) mit einem Aktuator (18) zusammenwirkt, vorzugsweise einem elektrisch und/oder mechanisch und/oder pneumatisch und/oder hydraulisch wirkenden Aktuator (18), der ausgebildet ist, das jeweilige Führungs- und Stützteil (16)
- in der Führungsposition (PF) in Richtung einer unterhalb des Führungs- und Stützteils (16) verlaufenden vulkanisierten Materialbahn (Mv.i) zu verstellen, und/oder
- in der Stützposition (PS) in Richtung einer oberhalb des Führungs- und Stützteils (16) verlaufenden vulkanisierten Materialbahn (Mv.i) zu verstellen.

11. Herstellungsanlage (1) nach einem der Ansprüche 7 bis 10,
**dadurch gekennzeichnet, dass**
zumindest einigen der Führungs- und Stützvorrichtungen (15.j) zwei übereinanderliegende Etagen (E.i) zugeordnet sind, wobei das Führungs- und Stützteil (16) der jeweiligen Führungs- und Stützvorrichtung (15.j) ausgebildet ist,
- in der Führungsposition (PF) gegen die vulkanisierte Materialbahn (Mv.i) in der Etage (E.i) unterhalb des Führungs- und Stützteils (16) zu drücken und
- in der Stützposition (PS) die vulkanisierte Materialbahn (Mv.i) in der Etage (E.i) oberhalb des Führungs- und Stützteils (16) abzustützen.

12. Herstellungsanlage (1) nach einem der Ansprüche 7 bis 11,
**dadurch gekennzeichnet, dass**
weiterhin jeder Etage (E.i) eine Andruckvorrichtung (10.i) zugeordnet ist, die in einer geöffneten Stellung der Vulkanisierungsformen (5.i) derartig in Richtung eines Unterteils (9b) der jeweiligen Vulkanisierungsform (5.i) gedrückt werden kann, beispielsweise hydraulisch und/oder elektrisch und/oder pneumatisch und/oder mechanisch, dass ein Randbereich (RMu.i) der von der jeweiligen Fördereinrichtung (3.i) bereitgestellten unvulkanisierten Materialbahn (Mu.i) durch die jeweilige Andruckvorrichtung (10.i) gegen das Unterteil (9b) der jeweiligen Vulkanisierungsform (5.i) gedrückt werden kann, zum Sichern der unvulkanisierten Materialbahn (Mu.i) beim Beladen in die jeweilige Vulkanisierungsform (5.i).

13. Herstellungsanlage (1) nach Anspruch 12,
**dadurch gekennzeichnet, dass**
die in der jeweiligen Etage (E.i) angeordneten Fördereinrichtungen (3.i) jeweils ausgebildet sind, zwischen ein Oberteil (9a) und das Unterteil (9b) der in derselben Etage (E.i) angeordneten geöffneten Vulkanisierungsform (5.i) zu verfahren und die von der jeweiligen Fördereinrichtung (3.i) bereitgestellte unvulkanisierte Materialbahn (Mu.i) während einer Rückführung der jeweiligen Fördereinrichtung (3.i) in die jeweilige Vulkanisierungsform (5.i) abzulegen, beispielsweise durch einen antreibbaren Riemen (8) der jeweiligen Fördereinrichtung (3.i).
